# EUROPEAN PATENT SPECIFICATION

(11) **EP 0 412 156 B1**
(45) Date of publication and mention of the grant of the patent: **01.09.1993**
(21) Application number: 88903371.8
(22) Date of filing: 14.04.1988
(51) Int. Cl.: G06K 19/00, G11B 20/10

(54) **TRUTH DETERMINATION METHOD FOR A MAGNETIC RECORDING MEDIUM**
ECHTHEITSERMITTLUNGSVERFAHREN FÜR EIN MAGNETISCHES AUFZEICHNUNGSMITTEL
PROCEDE DE DETERMINATION DE LA VALIDITE D'UN SUPPORT D'ENREGISTREMENT MAGNETIQUE

(43) Date of publication of application: 13.02.1991
(73) Proprietor: Kyodo Printing Co., Ltd., Tokyo 112 (JP)
(72) Inventor: NAKAHARA, Yoshihiko Kyodo Printing Co., Ltd. nai, Bunkyo-ku Tokyo 112 (JP)
(74) Representative: Pellmann, Hans-Bernd, Dipl.-Ing.
(86) International application number: JP8800369
(87) International publication number: WO8909981

(56) References cited:
- WO-A-85/03797
- GB-A- 1 338 232
- JP-A- 5 899 880
- JP-U- 5 953 533
- US-A- 4 562 490

## Description

### BACKGROUND OF THE INVENTION

The present invention relates to a method of determining whether a magnetic recording medium is true or false, and more particularly to an improvement in security of the use of the magnetic recording medium.

The present invention is adapted to a magnetic recording medium, e.g., a magnetic card requiring an unfair use preventing function and a forgery and alteration preventing function.

Conventionally, the security or protection of the magnetic card, for example, is improved by a method wherein azimuth magnetic recording is carried out to prevent the forgery by a usual reader-writer, a method using a magnetic bar code, or a method using a magnetic mark.

However, the conventional methods as mentioned above require a special magnetic card and a special reader-writer, causing complication of a card system.

### SUMMARY OF THE INVENTION

Accordingly, it is an object of the present invention to provide security of a magnetic recording medium with a simple system.

It is another object of the present invention to provide a method of determining whether a magnetic recording medium is true or false which improves security with a simple system.

According to the present invention the objects can be achieved by means of a method of determining whether a magnetic recording medium comprising a magnetic layer provided with at least two magnetic tracks is true or false, characterized by the steps of detecting the magnetic polarity of the tracks at the initial edge and/or the final edge of said recording medium and collating the combination of said magnetic polarities as a truth determining code for said magnetic recording medium with a proper combination of said magnetic polarities, and a magnetic recording medium suitable for this method.

As mentioned above, the truth determining code is recorded at the edge of the magnetic recording medium. Therefore, it is hard to read the truth determining code by a magnetic view or the like. Furthermore, whether the magnetic recording medium is true or false is determined by collating the combination of the magnetic polarity at the edge with a proper combination. Therefore, as far as the system of the truth determining code is unknown, it is impossible to forge or alter the magnetic recording medium.

Recording at the edge of a magnetic recording medium is already known from document WO 85/03797 wherein the recording of information being indicative for the position of an video tape is disclosed. This information is recorded on one special track in direction of the tape movement wherein said special track is placed at an edge of the video tape as a magnetic recording medium. Nevertheless, it is not necessary to check whether said information being recorded on said video tape and being indicative for the position of said video tape has been forged or altered.

Other objects and features of the invention will be more fully understood from the following detailed description and appended claims when taken with the accompanying drawings.

### BRIEF DESCRIPTION OF THE DRAWINGS

Fig. 1 is a schematic plan view of a first preferred embodiment of the magnetic recording medium used in the present invention;
Fig. 2 is a schematic plan view of a second preferred embodiment of the magnetic recording medium used in the present invention;
Fig. 3 is a schematic plan view of a third preferred embodiment of the magnetic recording medium used in the present invention;
Fig. 4 is a schematic diagrammatic view of a reader-writer for carrying out a preferred embodiment of the truth determining method according to the present invention; and
Fig. 5 is a waveform chart of sensor outputs of magnetic heads.

### DETAILED DESCRIPTION OF THE PREFERRED EMBODIMENTS

There will now be described some preferred embodiments of the present invention with reference to the drawings.

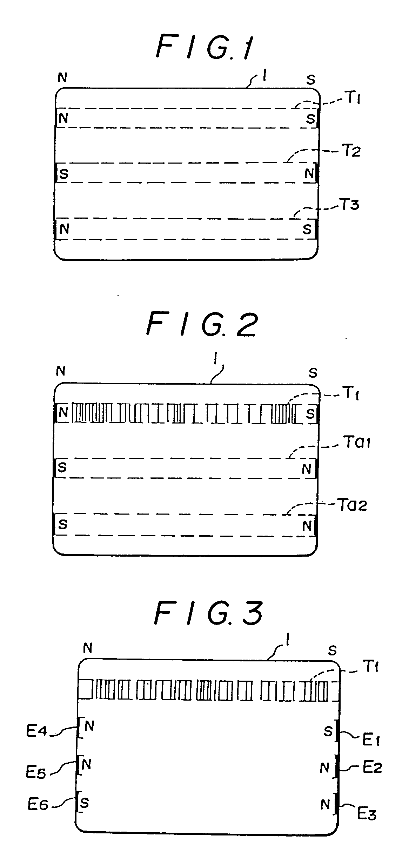

Referring to Fig. 1, a magnetic card 1 is provided with a magnetic layer whose magnetic polarity is oriented in one direction. The magnetic layer is provided with three magnetic tracks T1 - T3. As appreciated from Fig. 1, the magnetic polarity at opposite edges of the track T2 only is inverted, for example. Therefore, as will be hereinafter described, the combination of N-S-N or S-N-S may be obtained by detecting the magnetic polarity at the edges of the tracks, and this combination may be utilized as a truth determining code for the magnetic card. In this embodiment, the number of combination is 2³ = 8, that is, eight kinds of discrimination may be effected.

The truth determining code may be decided in accordance with a desired content recorded on the tracks T1 - T3, such as personal information and amount of money. For example, when the magnetic card 1 is a prepaid card, a remainder changes every time the card is used. Therefore, the truth determining code is decided in accordance with the remainder, and this code is updated every time the card is used. Accordingly, if the remainder is unfairly altered, such alteration can be easily discovered.

The magnetic card may be easily manufactured by forming the magnetic layer to be usually adopted and arbitrarily inverting the magnetic polarity. Thus, any special processes or steps are not necessary.

In the the magnetic recording medium according to Fig. 2 a data track T1 is formed independently of tracks Ta1 and Ta2 including the truth determining code.

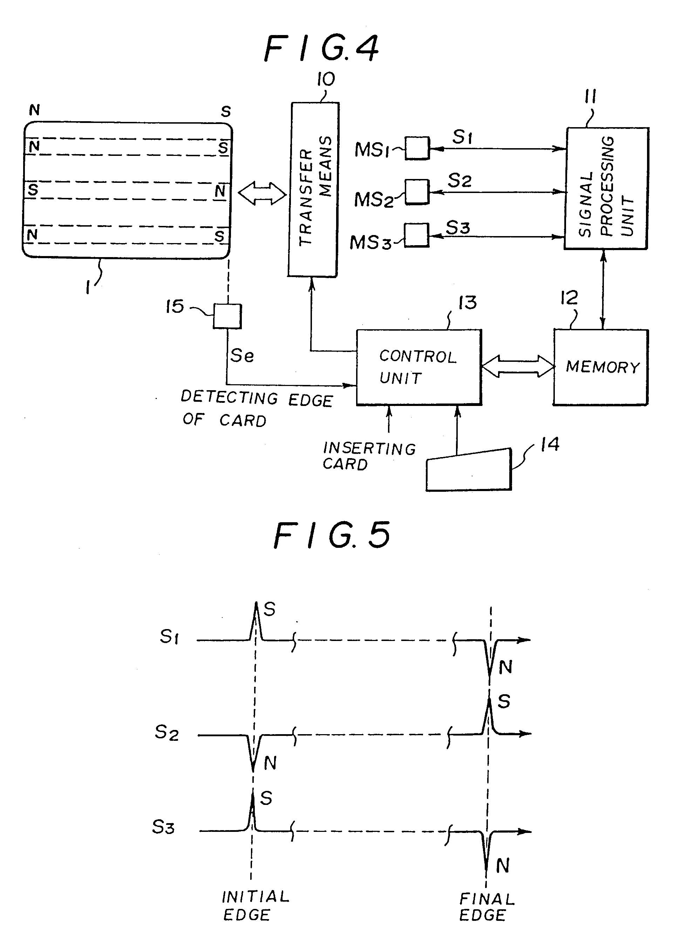

In the magnetic recording medium according to Fig. 3 the magnetic polarity at edges E1 - E6 only is inverted or non-inverted, and such is utilized as the truth determining code. In this case, the number of combination of the polarity becomes 2⁶.

As the inversion or the non-inversion of the magnetic polarity at the edges only is utilized, such cannot be read by a magnetic viewer. Further, in the case that the magnetic polarity at the edges is not inverted with respect to the orientation of the magnetic polarity of the magnetic layer, it is greatly hard to read a position of the truth determining code.

Fig. 4 is a schematic diagrammatic view of a reader-writer for carrying out a preferred embodiment of the truth determining method according to the present invention, and Fig. 5 is a waveform chart of sensor outputs of magnetic heads.

Referring to Fig. 4, the magnetic card 1 is a prepaid card as shown in Fig. 1, and has three magnetic recording tracks at whose edges the truth determining code is recorded.

The magnetic card 1 is movable by a transfer means 10 in the directions as depicted by a double-headed arrow in Fig. 4, and the information recorded on each track is adapted to be read by magnetic heads MS1 - MS3.

Signals S1 - S3 read are adapted to be input to a signal processing unit 11 where signal processing such as amplification and AD conversion is carried out, and the signals thus processed are adapted to be stored in a memory 12.

The information stored in the memory 12 is processed, e.g., calculated or modified by a control unit 13 as required. The control unit 13 is connected to an input unit 14 such as a ten-key unit for inputting a purchase price, for example. The control unit 13 is also connected to a sensor 15 for detecting the edges of the card 1, a display unit (not shown), etc.

The operation of this embodiment will now be described with reference to Figs. 4 and 5.

First, when the card 1 is inserted into the reader-writer, the transfer means 10 is operated by the control unit 13 to draw the card 1 into the device. When the edge of the card 1 is detected by the sensor 15, the signals S1 - S3 read as the information of the card 1 are stored in the memory 12 after a fixed period of time is elapsed.

Outputs from the magnetic heads MS1 - MS3 are inverted according to the magnetic polarity, and as shown in Fig. 5, the combination of S-N-S at the initial edge and the combination of N-S-N at the final edge are obtained as the truth determining code.

Then, a desired information (remainder or personal information, for example) in the memory 12 is read by the control unit 13, and a proper code is calculated by a predetermined operation. Then, the code read at the initial edge and the final edge is collated with the proper code. If the code read accords with the proper code, it is determined that the card 1 is true, and the subsequent operation is carried out. If the disaccordance between the code read and the proper code occurs a predetermined times or more, it is determined that the card 1 has been forged or altered, and the card 1 is not accepted.

If the card 1 is true, a purchase price, for example, is input by a user with the input unit 14, the remainder is read by the control unit 13 from the information stored in the memory 12, and the purchase price is substracted from the remainder. Then, the difference is stored again in the memory 12. At this time, when the difference or a fresh remainder is not more than a fixed amount, for example, the truth determining code is modified and stored in the memory 12. For example, the truth determining code is changed into the combination of S-N-N at the initial edge and the combination of N-S-S at the final edge.

When the necessary processing is ended, the transfer means 10 is operated by the control unit 13 to reverse the card 1. At this time, the information in the memory 12 is read by the control unit 13, and the information including the truth determining code is written on the tracks T1 - T3 of the card 1 by means of the magnetic heads MS1 - MS3. Then, the card 1 thus updated is returned to the user.

As described above, the truth determining code is recorded at the edges of the card 1, indicative of the inversion or non-inversion of the magnetic polarity. Therefore, even if the information in the card 1 is merely read by a reader or the like, the card 1 cannot be forged as far as the system of the truth determining code is unknown. Thusly, a greatly high security may be obtained by a simple method.

The above-mentioned embodiments are illustrative and may be modified or changed within the scope of the present invention. For example, the present invention is applicable to the determination of the truth of a general magnetic recording medium.

## Claims

1. A method of determining whether a magnetic recording medium comprising a magnetic layer provided with at least two magnetic tracks is true or false, **characterized by the steps of** detecting the magnetic polarity of said tracks at the initial edge and/or the final edge of said magnetic recording medium and collating the combination of said magnetic polarities as a truth determining code for said magnetic recording medium with a proper combination of said magnetic polarities.

2. A method according to claim 1, **characterized in that** said truth determining code is decided in accordance with a desired content recorded on said magnetic tracks.

3. A method according to claim 2, **characterized in that** said desired content recorded on said magnetic tracks is a remainder being changed every time said magnetic recording medium is used.

4. A magnetic recording medium for use in the methods according to claims 1 to 3 comprising a magnetic layer provided with at least two magnetic tracks (T1 - T3), the tracks extending to the initial edge and/or the final edge of the recording medium and having predetermined magnetic polarities written at the initial and/or final edges of the recording medium.

## Patentansprüche

1. Verfahren zum Bestimmen, ob ein Magnetaufzeichnungsträger wahr oder falsch ist, der eine Magnetschicht aufweist, die mit mindestens zwei Magnetspuren versehen ist, **gekennzeichnet durch** die Schritte zum Erfassen der magnetischen Polung der Spuren an dem Anfangsrand und/oder dem Endrand des Magnetaufzeichnungsträgers und zum Zusammenstellen der Kombination der magnetischen Polungen mit einer richtigen Kombination der magnetischen Polungen als Wahrheitsbestimmungscode für den Magnetaufzeichnungsträger.

2. Verfahren nach Anspruch 1,
**dadurch gekennzeichnet,** daß
der Wahrheitsbestimmungscode entsprechend einem auf den Magnetspuren aufgezeichneten erwünschten Inhalt bestimmt ist.

3. Verfahren nach Anspruch 2,
**dadurch gekennzeichnet,** daß
der auf den Magnetspuren aufgezeichnete erwünschte Inhalt ein Rest ist, der jedesmal zu ändern ist, wenn der Magnetaufzeichnungsträger benutzt wird.

4. Magnetaufzeichnungsträger zur Verwendung bei dem Verfahren nach Anspruch 1 bis 3 mit einer Magnetschicht, die mit mindestens zwei Magnetspuren (T1-T3) versehen ist, die sich zu dem Anfangsrand und/oder dem Endrand des Aufzeichnungsträgers erstrecken und die vorbestimmte magnetische Polungen haben, welche an dem Anfangs- und/oder Endrand des Aufzeichnungsträgers eingeschrieben sind.

## Revendications

1. Procédé pour déterminer si un support d'enregistrement magnétique comprenant une couche magnétique pourvue d'au moins deux pistes magnétiques est valide ou non, caractérisé par les étapes de détection de la polarité magnétique desdites pistes sur le bord initial et/ou le bord final dudit support d'enregistrement magnétique et d'assemblage de la combinaison desdites polarités magnétiques sous forme d'un code de détermination de validité pour ledit support d'enregistrement magnétique avec une combinaison correcte desdites polarités magnétiques.

2. Procédé selon la revendication 1, caractérisé en ce que ledit code de détermination de validité est décidé en fonction d'une contenu souhaité enregistré sur lesdites pistes magnétiques.

3. Procédé selon la revendication 2, caractérisé en ce que ledit contenu souhaité enregistré sur lesdites pistes magnétiques constitue un restant modifié à chaque fois que ledit support d'enregistrement magnétique est utilisé.

4. Support d'enregistrement magnétique (1) pour la mise en oeuvre du procédé selon les revendications 1 à 3, comprenant une couche magnétique pourvue d'au moins deux pistes magnétiques (T1 à T3), les pistes s'étendant vers le bord initial et/ou le bord final du support d'enregistrement et présentant des polarités magnétiques prédéterminées, écrites sur le bord initial et/ou final du support d'enregistrement.
